# FASCICULE DE BREVET EUROPEEN

(11) **EP 0 468 835 B1**
(45) Date de publication et mention de la délivrance du brevet: **05.01.1994**
(21) Numéro de dépôt: 91401760.3
(22) Date de dépôt: 27.06.1991
(51) Int. Cl.: B62D 6/00, B62D 5/06

(54) **Dispositif de direction assistée hydraulique pour véhicule automobile**
Hydraulische Hilfskraftlenkungseinrichtung für Kraftfahrzeuge
Hydraulic power steering device for a motor vehicle

(30) Priorité: 27.07.1990 FR 9009647
(43) Date de publication de la demande: 29.01.1992
(73) Titulaire: AUTOMOBILES PEUGEOT, 75116 Paris (FR); AUTOMOBILES CITROEN, 92200 Neuilly-sur-Seine (FR)
(72) Inventeur: Halconruy, Thierry, F-78000 Versailles (FR)
(74) Mandataire: Durand, Yves Armand Louis

(56) Documents cités:
- EP-A- 0 081 658
- EP-A- 0 316 235
- GB-A- 2 191 159

## Description

L'invention concerne un dispositif de direction assistée hydraulique pour véhicule automobile tel que défini dans le préambule de la revendication 1, du type comportant, interposé entre le volant de direction du véhicule et le pignon de crémaillère de direction, une vanne de commande d'un vérin d'assistance de direction, qui est adaptée pour relier l'une des chambres du vérin à une pompe et l'autre chambre à un réservoir du fluide hydraulique ou inversement, ainsi que des moyens de modulation de l'assistance en fonction d'un paramètre extérieur, adaptés pour court-circuiter partiellement les deux chambres du vérin.

Dans les dispositifs de direction de ce type, qui sont connus (voir par exemple la demande de brevet européen EP-A-0 316 235), les deux chambres du vérin sont reliées au réservoir par l'intermédiaire de la vanne, lorsqu'elles sont court-circuitées, ce qui occasionne une perte de charge importante. Il en résulte des effets parasites indésirables.

La présente invention a pour but de proposer un dispositif de direction qui ne présente pas les inconvénients susmentionnés du dispositif connu.

Pour atteindre ce but, le dispositif de direction selon l'invention est caractérisé en ce qu'il comporte des moyens progressifs de liaison directe et simultanée des deux chambres du vérin au réservoir.

L'invention sera mieux comprise et d'autres buts, caractéristiques, détails et avantages de celle-ci apparaîtront plus clairement au cours de la description explicative qui va suivre faite en référenre aux dessins schématiques annexés donnés uniquement à titre d'exemple illustrant un mode de réalisation de l'invention et dans lesquels.

La figure 1 est une vue de principe schématique d'un système de modulation pour véhicule automobile, équipé d'un dispositif de modulation selon l'invention.

Les figures 2 et 3 sont des vues en coupe axiale et à plus grande échelle du dispositif de modulation équipant système représenté à la figure 1 et montre le dispositif dans deux positions de fonctionnement différentes.

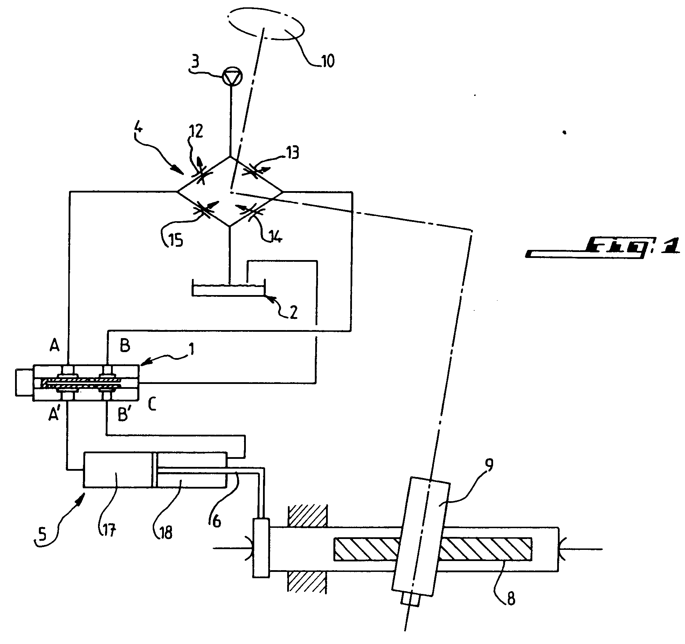

A la figure 1, le dispositif de modulation selon l'invention est identifié par le chiffre de référence 1. Il est disposé dans un système hydraulique comprenant un réservoir de fluide hydraulique 2, une pompe 3, une vanne 4 et un vérin d'assistance 5 dont la tige de piston indiquée en 6 est adaptée pour actionner le dispositif mécanique d'assistance comportant de façon connue en soi, une crémaillère 8 engrénant un pignon 9 relié mécaniquement au volant de direction du véhicule, qui est indiqué schématiquement en 10. Egalement de façon connue en soi, la vanne hydraulique 4 se comporte comme un pont de valves constitué de 4 valves 12 à 15. Une paire de points opposés est reliée au réservoir 2 et à la pompe 3 tandis que l'autre paire de points opposés est reliée, à une ouverture de raccord A du dispositif de modulation 1 et à une ouverture de raccord B de celui-ci. Le vérin hydraulique comporte deux chambres 17 et 18 reliées respectivement à des ouvertures A′ et B′.

On constate encore sur la figure 1, que le dispositif de modulation 1 selon l'invention comporte une ouverture de sortie C qui communique directement avec le réservoir 2.

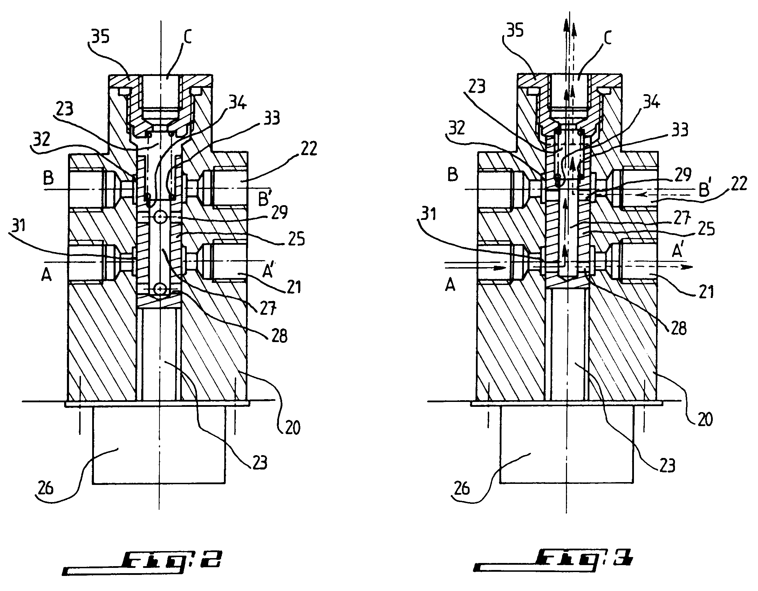

En se reportant aux figures 2 et 3, on constate que le dispositif de modulation 1 selon l'invention comprend un boitier 20, qui comporte deux alésages diamétraux 21,22 et un alésage axial central 23. Les extrémités ouvertes vers l'extérieur de l'alésage 21 constituent les ouvertures A et A′ du dispositif, tandis que les extrémités correspondantes de l'alésage 22 forment les ouvertures B et B′. La sortie est formée par une extrémité de l'alésage axial central 23.

Dans cet alésage 23 coulisse un tiroir 25 sous l'action d'un moteur 26 lui-même commandé par des moyens de modulation de l'assistance (non représentés), selon un paramètre extérieur, tel que par exemple la vitesse ou le régime moteur dans le cas notamment de l'application de l'invention à un véhicule automobile.

Le tiroir 25 comporte un perçage axial borgne 27 qui est ouvert du côté de la sortie C du dispositif 1 et des perçages diamétraux 28, 29, qui traversent le perçage axial borgne 27 et sont situés de telle façon qu'ils assurent dans une position extrême du tiroir 23 la communication maximale entre les alésages diamétraux 21, 22 et le perçage axial 27 et qu'ils soient latéralement décalés de ces alésages lorsque le tiroir se trouve dans l'autre position extrême. Dans cette position il n'y a pas de communication entre les alésages diamétraux et le perçage 27. C'est la position de fermeture du tiroir. Pour assurer aussi dans cette position du tiroir la communication entre les ouvertures de chaque alésage diamétral, l'alésage axial 23 comporte au niveau de chaque alésage diamétral 21, 22 une gorge annulaire 31 ou 32.

Il est encore à noter que le tiroir 25 est déplacé par le moteur 26 de sa position de fermeture (figure 2) dans ses positions de mise en communication des alésages 21, 22 avec le perçage 27 (figure 3) à l'encontre d'un ressort de rappel 33. Le ressort de rappel prend appui par une extrémité sur un épaulement 34 du tiroir et par son autre extrémité sur un organe de raccord 35 du conduit de liaison directe au réservoir 2.

Le dispositif de modulation 1 selon l'invention fonctionne de la manière suivante dans le système représenté à la figure 1.

Dans la position de fermeture du tiroir 25, représentée à la figure 2, la liaison entre A et A′ et B et B′ est assurée respectivement par les gorges anulaires 31 et 32. Le faible jeu du tiroir dans son alésage garantit l'étanchéité et empêche notamment le fluide hydraulique de pénétrer à travers les perçages diamétraux 28, 29 dans le perçage axial 27. Tout le fluide entrant en A ou B ressort par A′ ou B′. Lorsque le tiroir 25 se déplace sous l'action du moteur 26 en direction de son autre position extrême représentée à la figure 3, il met progressivement en communication les gorges 31 et 32 respectivement avec les perçages diamétraux 28,29 et ainsi avec le perçage axial 27. Le fluide peut alors s'écouler au travers du perçage 27 ménagé dans le tiroir au réservoir 22 comme cela est illustré par des flèches. Le déplacement des tiroirs étant progressif, on module le degré d'assistance par la cote de recouvrement entre la gorge 31 et le perçage diamétral 28 et entre la gorge 32 et le perçage diamétral 29.

## Revendications

1. Dispositif de direction assistée hydraulique pour véhicule automobile, du type comportant interposé entre le volant de direction (10) du véhicule et le pignon (9) de crémaillère (8) de direction, une vanne de commande (4) d'un vérin d'assistance de direction (5), qui est adapté pour relier l'une des chambres (17,18) du vérin à une pompe (3) et l'autre chambre (18,17) à un réservoir du fluide hydraulique (2) ou inversement ainsi que des moyens de modulation de l'assistance en fonction de paramètres extérieurs, adaptés pour court-circuiter partiellement les chambres du vérin, caractérisé en ce que les dits moyens de modulation comportent des moyens progressifs (25) de liaison directe et simultanée des deux chambres (17, 18) du vérin (5) au réservoir (2).

2. Dispositif selon la revendication 1, caractérisé en ce qu'il comprend un boitier (20) traversé par deux passages (21, 22) reliant l'une ou l'autre des chambres (17, 18) du vérin (5) soit à la pompe (3) soit au réservoir (2), un espace interne (23) en communication permanente avec le réservoir (2) et un organe (25) adapté pour relier progressivement lesdits passages (21, 22) à l'espace interne (27) sous l'action d'un moyen (26) sensible au paramètre de modulation précité.

3. Dispositif selon la revendication 2, carartérisé en ce que le corps (20) est traversé par deux alésages (21, 22) et que l'espace interne (27) est formé par un alésage (23) qui s'étend perpendiculairement aux alésages (21, 22), est traversé par ceux-ci et communique à une extrémité avec le réservoir (2) et que l'organe de liaison progressive est formé par un tiroir mobile dans l'alésage (23) entre une position extrême dans laquelle il établit une voie de communication de section transversale maximale entre les alésages (21, 22) et l'espace interne (27) et une position dans laquelle la voie de communication est fermée, les alésages traversant (21, 22) étant constamment ouverts.

4. Dispositif selon la revendication 3, caractérisé en ce que le tiroir (25), caractérisé en ce que le tiroi (25), monté coulissant, de façon étanche, dans l'alésage perpendiculaire (23), comprend un perçage borgne, ouvert du côté de l'ouverture de l'alésage (23) qui communique avec le réservoir (2) et comporte des perçages (28, 29) qui le traversent diamétralement en passant à travers le perçage axial borgne (27) et sont axialement décalés de façon à établir en fonction de la position du tiroir (25) les voies de communication entre les alésages (21, 22) du boitier et le perçage axial borgne (27) du tiroir et à isoler ce perçage (27) des alésages (21, 22).

5. Dispositif selon la revendication 4, caractérisé en ce que l'alésage (23) perpendiculaire aux alésages (21, 22) comporte au niveau de l'ouverture de ces alésages dans l'alésage (23) des gorges circulaires (31, 32) assurant la liaison permanente entre chacune des deux chambres (17, 18) du vérin (5) et la vanne (4).

6. Dispositif selon l'une des revendications 2 à 5, caractérisé en ce que le tiroir (25) est déplaçable vers sa position de communication maximale des alésages (21, 22) avec le perçage axial borgne (27) du tiroir (25) à l'encontre d'un ressort de rappel (23) prenant appui à une extrémité sur épaulement (34) du tiroir et à son autre extrémité sur l'organe de raccord du conduit de liaison directe au réservoir (2).

## Patentansprüche

1. Hydraulische Hilfskraftlenkungsvorrichtung für ein Kraftfahrzeug, derjenigen Gattung mit einem zwischen dem Lenkrad (10) des Fahrzeugs und dem Ritzel (9) der Lenkungszahnstange (8) gefügten Ventil (4) zur Steuerung eines Servolenkungskraftzylinders (5), die angepasst ist, um die eine der Kammern (17, 18) des Kraftzylinders mit einer Pumpe (3) und die andere Kammer (18,17) mit einem hydraulischen Fluidbehälter (2) oder umgekehrt zu verbinden, sowie mit Mitteln zur Modulierung der Lenkhilfe in Abhängigkeit von äusseren Parametern, die angepasst sind, um die Kammern des Kraftzylinders teilweise kurzzuschliessen, dadurch gekennzeichnet, dass die besagten Modulierungsmittel fortschreitende Mittel (25) zur unmittelbaren und gleichzeitigen Verbindung der beiden Kammern (17, 18) des Kraftzylinders (5) mit dem Behälter (2) aufweisen.

2. Vorrichtung nach Anspruch 1, dadurch gekennzeichnet, dass sie ein durch zwei die eine oder die andere der Kammern (17, 18) des Kraftzylinders (5) entweder mit der Pumpe (3) oder mit dem Behälter (2) verbindende Durchlässe (21, 22) durchsetzes Gehäuse (20), einen in ständiger Verbindung mit dem Behälter (2) stehenden inneren Raum (23) und ein Glied (25) umfasst, das angepasst ist, um die besagten Durchlässe (21, 22) mit dem inneren Raum (27) unter der Wirkung eines gegen den vorgenannten Modulierungsparameter empfindlichen Mittels (26) fortschreitend zu verbinden.

3. Vorrichtung nach Anspruch 2, dadurch gekennzeichnet, dass der Körper (20) durch zwei Bohrungen (21, 22) durchsetzt ist und dass der Innenraum (27) durch eine Bohrung (23) gebildet wird, die sich senkrecht zu den Bohrungen (21, 22) erstreckt, durch diese durchsetzt wird und an einem Ende mit dem Behälter (2) in Verbindung steht und dass das fortschreitende Verbindungsglied durch einen Schieber gebildet wird, der in der Bohrung (23) zwischen einer Endstellung, in welcher er einen Verbindungsweg grösstem Querschnitts zwischen den Bohrungen (21, 22) und dem Innenraum (27) herstellt und einer Stellung in welcher der Verbindungsweg geschlossen ist, beweglich ist, wobei die Durchgangsbohrungen (21, 22) ständig offen sind.

4. Vorrichtung nach Anspruch 3, dadurch gekennzeichnet, dass der in dichter Weise in der orthogonalen Bohrung (23) gleitbar angeordnete Schieber (25) ein blindes Bohrloch aufweist, das zur Offnung hin derjenigen Bohrung (23), die mit dem Behälter (2) in Verbindung steht, offen ist und Bohrlöcher (28, 29) aufweist, die ihn diametral durchsetzen und durch das axiale blinde Bohrloch (27) führen und axial derart versetzt sind, um in Abhängigkeit der Stellung des Schiebers (25) die Verbindungswege zwischen den Bohrungen (21, 22) des Gehäuses und das axiale blinde Bohrloch (27) des Schiebers herzustellen und das Bohrloch (27) von den Bohrungen (21, 22) zu isolieren.

5. Vorrichtung nach Anspruch 4, dadurch gekennzeichnet, dass die zu den Bohrungen (21, 22) senkrechte Bohrung (23) im Bereich der Einmündung dieser Bohrungen in die Bohrung (23), die ständige Verbindung zwischen jeder der beiden Kammern (17, 18) des Kraftzylinders (5) und dem Ventil (4) gewährleistende kreisförmige Nuten (31, 32) aufweist.

6. Vorrichtung nach einem der Ansprüche 2 bis 5, dadurch gekennzeichnet, dass der Schieber (25) zu seiner Stellung hin zur maximalen Verbindung der Bohrungen (21, 22) mit dem axialen blinden Bohrloch (27) des Schiebers (25) entgegen einer Rückstellfeder (23) verschiebbar ist, welche sich mit einem Ende an einer Schulter (34) des Schiebers und mit ihrem anderen Ende an dem Glied zum Anschluss der direkten Verbindungsleitung an dem Behälter (2) abstützt.

## Claims

1. Hydraulic power-assisted steering device for an automotive vehicle, of the type comprising, interposed between the steering wheel (10) of the vehicle and the pinion (9) of the toothed steering rack (8), a valve (4) for the control of a steering-assisting jack (5), which is adapted to connect one of the chambers (17, 18) of the jack to a pump (3) and the other chamber (18, 17) to a hydraulic fluid tank (2) or reversely as well as means for the modulation of the assistance as a function of outside parameters, adapted to partially short-circuit the chambers of the jack, characterized in that the said modulation means comprise gradual means (25) for the direct and simultaneous connection of both chambers (17, 18) of the jack (5) to the tank (2).

2. Device according to claim 1, characterized in that it comprises a casing (20) through which extend two passageways (21, 22) connecting one or the other one of the chambers (17, 18) of the jack (5) either to the pump (3) or to the tank (2), an internal space (23) in permanent communication with the tank (2) and a member (25) adapted to gradually connect the said passageways (21, 22) to the internal space (27) under the action of a means (26) sensitive to the aforesaid modulation parameter.

3. Device according to claim 2, characterized in that two bores (21, 22) are extending through the body (20) and that the internal space (27) is formed of a bore (23) which extends perpendicularly to the bores (21, 22) which are extending through it and communicates at one end with the tank (2) and that the gradual connection member is formed of a spool movable in the bore (23) between an end position in which it provides a communication path of maximum cross-section between the bores (21, 22) and the internal space (27) and a position in which the communication path is closed, the thoroughfare bores (21, 22) being constantly open.

4. Device according to claim 3, characterized in that the spool (25) slidably mounted in a fluid-tight manner in the perpendicular bore (23) comprises a blind boring open towards the opening of that bore (23) which communicates with the tank (2) and comprises borings (28, 29) which extend diametrally through it while passing through the axial blind boring (27) and are axially offset so as to provide in accordance with the position of the spool (25) the communication paths between the bores (21, 22) of the casing and the axial blind boring (27) of the spool and to isolate this boring (27) from the bores (21, 22).

5. Device according to claim 4, characterized in that the bore (23) perpendicular to the bores (21, 22) comprises at the level of the opening of these bores into the bore (23) circular grooves (31, 32) ensuring the permanent connection between each one of the two chambers (17, 18) of the jack (5) and the valve (4).

6. Device according to one of claims 2 to 5, characterized in that the spool (25) is displaceable towards its position of maximum communication of the bores (21, 22) with the axial blind boring (27) of the spool (25) against a return spring (23) bearing with one end onto a shoulder (34) of the spool and with its other end onto the member of connection of the direct connection duct to the tank (2).
